# EUROPÄISCHE PATENTSCHRIFT

(11) **EP 0 648 655 B1**
(45) Veröffentlichungstag und Bekanntmachung des Hinweises auf die Patenterteilung: **01.05.1996**
(21) Anmeldenummer: 94114844.7
(22) Anmeldetag: 21.09.1994
(51) Int. Cl.: B60R 27/00, A01M 29/00

(54) **Einrichtung zum Vertreiben von Kleintieren aus Kraftfahrzeug-Motorräumen**
Device to drive away small animals from the engine compartment of a motor vehicle
Dispositif pour chasser des petits animaux du compartiment moteur d'une automobile

(30) Priorität: 13.10.1993 DE 4334885
(43) Veröffentlichungstag der Anmeldung: 19.04.1995
(73) Patentinhaber: Volkswagen Aktiengesellschaft, D-38436 Wolfsburg (DE)
(72) Erfinder: Hiestermann, Kurt, Dipl.-Ing., D-38479 Tappenbeck (DE)

(56) Entgegenhaltungen:
- DE-A- 3 903 375

## Beschreibung

Die Erfindung betrifft eine Einrichtung gemäß dem Oberbegriff des Patentanspruchs 1.

Die Problematik des Eindringens von Kleintieren, insbesondere Mardern und anderen Nagetieren, in den Motorraum von Kraftfahrzeugen ist in einem Aufsatz in der Automobiltechnischen Zeitschrift 87 (1985) Seiten 283 bis 288, ausführlich dargelegt. Im Vordergrund steht dabei die Gefahr der Beschädigung für die sichere Funktionsweise des Kraftfahrzeuges wichtiger Schläuche und Kabel durch Nagen der Tiere, die ggf. das Material auffressen.

In der genannten Literaturstelle sind auch die bekannten Versuche zur Lösung dieses Problems, d. h. zum Fernhalten bzw. Vertreiben von Kleintieren, mit ihren Vor- und Nachteilen angegeben. Als optimal wird dort die Kombination von Lärm und Lichtblitzen angesehen, die durch ein Raumüberwachungssystem beim Eindringen eines Kleintieres ausgelöst werden. Offenbar ist dabei an einen zusätzlichen Schallerzeuger gedacht.

Des weiteren ist aus der deutschen Offenlegungsschrift DE 39 09 375 A1 eine Vorrichtung zum Vertreiben von Tieren aus dem Motorraum und dem Achsbereich von Kraftfahrzeugen bekannt, die ein Gerät zur Erzeugung einer für das Tier unangenehmen Atmosphäre durch Verdampfen eines Reizmittels und Verwirbelung dieses Reizmittels beinhaltet. In der Nähe der zu schützenden Teile sind Sensoren angebracht, die das eindringende Tier selektieren und den Verdampfungsvorgang und die Verwirbelung mittels eines für wenige Sekunden anlaufenden Lüfters auslösen.

Neben dem Nachteil eines zusätzlichen gerätetechnischen Aufwandes ist dabei auch die Verdampfung eines Reizmittels aus den unterschiedlichsten Gründen problematisch.

Der Erfindung, die die allgemeine Methode der von einem Bewegungsmelder ausgelösten Erzeugung von mindestens einer physikalischen Größe ausnutzt, liegt die Aufgabe zugrunde, eine Einrichtung zu schaffen, die bei verringertem Aufwand eine erhöhte Zuverlässigkeit bietet und auf einfache Weise nachrüstbar ist.

Die Aufgabe wird bei einer gattungsgemäßen Einrichtung durch die kennzeichnenden Merkmale des Patentanspruchs gelöst. Vorteilhafte Ausbildungen der Erfindung sind in den Unteransprüchen dargestellt.

Gemäß der Erfindung ist vorgesehen, daß das im Motorraum vorgesehene Mittel zur Erzeugung eines Luftstroms ein bereits vorhandener elektrisch ansteuerbarer Lüfter eines Kühlsystems der Antriebsmaschine ist, der bei ausgeschalteter Antriebsmaschine durch den Bewegungsmelder ansteuerbar ist. Das somit entstehende Geräusch und die erzeugte Luftströmung dienen dem Vertreiben in den Motorraum eindringender oder bereits eingedrungener Kleintiere.

Der Bewegungsmelder ist vorzugsweise im Eintrittsbereich der Kleintiere in den Motorraum angeordnet. Da die Möglichkeit besteht, daß ein einziger Bewegungsmelder nicht alle Eintrittsbereiche abdecken kann, kann es zweckmäßig sein, mehrere Bewegungsmelder vorzusehen.

Für die Fälle, in denen ein Kleintier trotzdem in den Motorraum eindringt, ist nach einer weiteren Ausbildung eine Halteschaltung zur Sicherstellung einer vorgegebenen Mindesteinschaltzeit der Mittel zur Erzeugung eines Luftstromes vorgesehen. Das bedeutet, daß auch in den Fällen, in denen der Bewegungsmelder infolge der Fortbewegung des Kleintieres, das sich bereits im Motorraum befindet, nicht mehr anspricht, der Lüfter noch als Geräuschquelle oder als Gebläse arbeitet und so das Festsetzen des Kleintieres an einer anderen Stelle im Motorraum verhindert.

Mit der Erfindung ist demgemäß eine gattungsgemäße Einrichtung geschaffen, die unter Rückgriff auf ohnehin vorhandene Teile einen wirksamen Schutz gegen das Verweilen von Kleintieren im Motorraum eines Kraftfahrzeuges bietet.

Nachfolgend wird die Erfindung anhand eines Ausführungsbeispieles näher beschrieben.

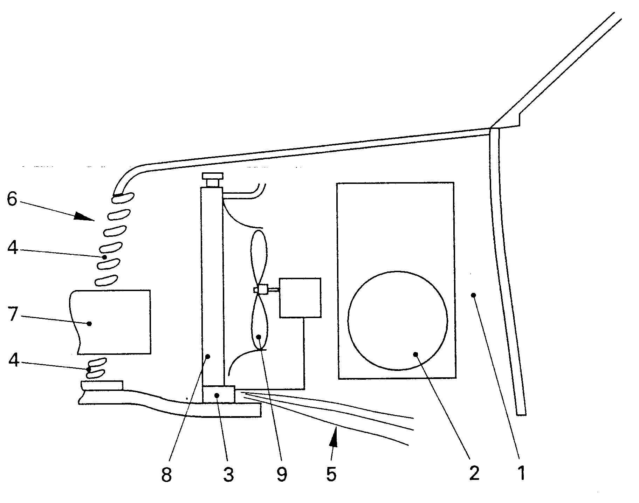

Der Motorraum 1 des in der Figur teilweise dargestellten Kraftfahrzeuges, in dem sich die als Verbrennungsmotor ausgebildete Antriebsmaschine 2 befindet, weist an seiner Frontseite Lufteintrittsöffnungen 4 am Grill 6 und unterhalb des Stoßfängers 7 auf, durch die während der Bewegung des Kraftfahrzeuges in Abhängigkeit der Fahrgeschwindigkeit durch den dynamischen Druck des Fahrtwindes und einer damit entstandenen Druckdifferenz im Motorraum 1 eine Luftströmung entsteht und zur Kühlung des Verbrennungsmotors 2 ausgenutzt wird. Nach den Lufteintrittsöffnungen 4 ist zumindest ein Kühler 8 für den Verbrennungsmotor 2 angeordnet. Im Luftstrom befindet sich weiterhin ein Lüfter 9, der die eintretende Kühlluft während des Fahrtbetriebes durch den Kühler 8 auf die zu kühlenden Partien des Verbrennungsmotors 2 zieht. Die erwärmte Luft strömt durch den unteren offenen Bereich 5 aus dem Motorraum 1 heraus.

Im Motorraum 1 eines Kraftfahrzeuges befinden sich Hohlräume, die bei abgestelltem Fahrzeug von Kleintieren, insbesondere Mardern oder anderen Nagetieren, gern aufgesucht werden, die dabei die den Hohlräumen benachbarten Kunstoffteile, wie Kabel und Schläuche durch Beißen beschädigen oder zerstören können. Um ein Eindringen solcher Kleintiere zu verhindern ist im unteren offenen Bereich 5 des Motorraums 1 der von den Kleintieren als Eintrittsbereich genutzt wird, zumindest ein Bewegungsmelder 3 angeordnet, der bei ausgeschalteter Antriebsmaschine 2 den Lüfter 9 steuert. Durch das vom Lüfter 9 erzeugte Geräusch und den im Motorraum entstehenden Luftstrom werden die Kleintiere davon abgehalten, in den Motorraum 1 einzudringen und Kunstoffteile zu beschädigen. Der Lüfter 9 bleibt eine Mindesteinschaltzeit von mehreren Minuten in Betrieb, so daß bereits eingedrungene Kleintiere sich nicht festsetzen.

### BEZUGSZEICHENLISTE

- *1*: *Motorraum*
- *2*: *Verbrennungsmotor*
- *3*: *Bewegungsmelder*
- *4*: *Lufteintrittsöffnung*
- *5*: *offener Bereich*
- *6*: *Grill*
- *7*: *Stoßfänger*
- *8*: *Kühler*
- *9*: *Lüfter*

## Patentansprüche

1. Einrichtung zum Vertreiben von Kleintieren aus Kraftfahrzeug-Motorräumen, die zumindest einen Bewegungsmelder (3) aufweist, mit einem im Motorraum (1) vorgesehenen Mittel (9) zur Erzeugung eines Luftstromes, welches durch den Bewegungsmelder ansteuerbar ist, dadurch gekennzeichnet, daß das Mittel (9) ein elektrisch ansteuerbarer Lüfter für ein Kühlsystem (8) der Antriebsmaschine (2) des Kraftfahrzeuges ist, der bei ausgeschalteter Antriebsmaschine (2) durch den Bewegungsmelder (3) ansteuerbar ist.

2. Einrichtung nach Anspruch 1, dadurch gekennzeichnet, daß der Bewegungsmelder (3) im Eintrittsbereich (5) der Kleintiere in den Motorraum (1) angeordnet ist.

3. Einrichtung nach einem der Ansprüche 1 oder 2, dadurch gekennzeichnet, daß eine Halteanordnung zur Sicherstellung einer vorgegebenen Mindesteinschaltzeit des Mittels (9) zur Erzeugung eines Luftstromes vorgesehen ist.

## Claims

1. Device for expelling small creatures out of motor vehicle engine compartments, which comprises at least one movement sensor (3), having a means (9) provided in the engine compartment (1) for producing an airflow which can be controlled by means of the movement sensor, characterised in that the means (9) is an electric fan for a cooling system (8) of the drive machine (2) of the motor vehicle which, in the event of the drive machine (2) being switched off, can be controlled by means of the movement sensor (3).

2. Device according to claim 1, characterised in that the movement sensor (3) is disposed in the region (5) where the small creatures enter the engine compartment (1).

3. Device according to any one of claims 1 or 2 characterised in that a holding arrangement is provided for the purpose of ensuring that the means (9) is switched on for a predetermined minimum time to produce an airflow.

## Revendications

1. Dispositif pour chasser des petits animaux hors des compartiments des moteurs de véhicules automobiles, dispositif qui présente au moins un détecteur de mouvement (3), avec un moyen (9), prévu dans le compartiment du moteur (1), qui sert à produire un courant d'air, qui peut être commandé par le détecteur de mouvement, dispositif caractérisé en ce que le moyen (9) est un ventilateur, qui peut être commandé électriquement, pour un système de refroidissement (8) du moteur d'entraînement (2) du véhicule automobile, ventilateur qui peut être commandé par le détecteur de mouvement(3), quand le moteur à combustion interne (2) est débranché.

2. Dispositif selon la revendication 1, caractérisé en ce que le détecteur de mouvement (3) est disposé dans la zone d'entrée (5) des petits animaux dans le compartiment du moteur (1).

3. Dispositif selon l'une des revendications 1 ou 2, caractérisé en ce que l'on prévoit un dispositif d'arrêt pour assurer un temps minimal prédéterminé de branchement au moyen (9) pour produire un courant d'air.
